# EUROPÄISCHE PATENTANMELDUNG

(11) **EP 2 579 235 A2**
(43) Veröffentlichungstag der Anmeldung: **10.04.2013**
(21) Anmeldenummer: 12006867.1
(22) Anmeldetag: 02.10.2012
(51) Int. Cl.: G09B 23/28

(54) **Medizinische Haltevorrichtung zur Lagerung von Humanpräparaten für Schulungszwecke**

(30) Priorität: 05.10.2011 DE 102011114840
(71) Anmelder: LINVATEC CORPORATION, Largo, Florida 33773 (US)
(72) Erfinder: Marks, Peter, 65468 Trebur (DE)
(74) Vertreter: Behrens, Helmut

(57) **Zusammenfassung**

Die Erfindung betrifft eine medizinische Haltevorrichtung für Humanpräparate, die für Schulungszwecke vorgesehen ist. Dabei enthält die Haltevorrichtung ein Traggestell (4), auf dessen horizontaler Platte (5) eine wannenförmige Vertiefung vorgesehen ist, wobei auf dem Traggestell (4) mindestens eine in alle drei Raumachsen verstellbare Spannaufnahmevorrichtung (2) angeordnet ist, in der ein Humanpräparat mit einem Gelenkteil befestigbar ist. Die Erfindung ist dadurch gekennzeichnet, dass am Traggestell (4) von der Spannaufnahmevorrichtung (2) seitlich beabstandet eine Gegenlagervorrichtung (3) befestigt ist, die zur Lagerung oder Fixierung des anderen Gelenkteils dient.

## Beschreibung

Die Erfindung betrifft eine medizinische Haltevorrichtung zur Lagerung von Humanpräparaten für Schulungszwecke gemäß dem Oberbegriff des Patentanspruchs 1.

Zum Erlernen chirurgischer Operationen oder einer Arthroskopie scheiden häufig lebende Personen aus, so dass dies an konservierten Leichenkadavern an sogenannten Humanpräparaten durchgeführt wird. Um den übenden Operateur möglichst realistische Trainingsoperationen zu ermöglichen, sind zu deren Durchführung Lagerungssysteme notwendig, um die zu operierenden Körperstellen praxisnah erreichen zu können. Häufig werden dabei Humanpräparate verwendet, die nur die zu operierenden Körperteile wie zum Beispiel eine Hüfte, eine Schulter oder ein Knie umfassen, die dann fest verankert werden müssen, um die Trainingsoperation durchführen zu können. Dazu ist es notwendig, die Humanpräparate an einer Haltvorrichtung so zu lagern oder zu fixieren, dass damit die zu operierenden Körperstellungen realitätsnah nachbildbar sind.

Eine derartige Haltevorrichtung zum Fixieren oder Lagern menschlicher Extremitäten für chirurgische Trainingsoperationen ist aus dem Verkaufskatalog der US-Firma Sawbones, P.O. P.O. Box 409, Vashon, WA98070, aus dem Jahre 2006, Seite 76, bekannt, die offensichtlich auf ortfesten Laboreinrichtungen montierbar ist. Die Haltevorrichtung besteht aus einer horizontalen Auffangwanne aus Edelstahlblech, die auf einem flachen Traggestell montiert ist und in deren hinterem Bereich eine Haltesäule zum Einspannen von menschlichen Extremitäten wie Knien, Fußgelenken, Handgelenken und Schultergelenken befestigt ist. Diese Haltesäule weist ein vertikales Rohrteil auf, in das oben ein verschwenkbares Drehgelenk lösbar eingeklemmt ist. In das Drehgelenk ist als axiale Verlängerung der Haltesäule ein Rundstab befestigt, an dessen oberem Ende ein u-förmiger Befestigungskopf mit einer Spannschraube vorgesehen ist, an dem die menschlichen Extremitäten festgeklemmt werden können. Um die Extremitäten in eine Operationsposition wie beim menschlichen Ganzkörperobjekt zu bringen, kann der mit dem Drehgelenk verbundene Befestigungskopf nach vorne und hinten geschwenkt und in dem Rohrteil um seine Achse verdreht werden. Gleichzeitig ist das Rohrteil zur Auffangwanne durch eine Klemmverbindung vertikal verstellbar, so dass der Befestigungskopf in alle drei Raumrichtungen verstellbar und fixierbar ist, um entsprechende Übungsoperationen oder eine Arthroskopie in den tatsächlich vorkommenden Humanlagen nachbilden zu können. Mit einer derartigen Haltevorrichtung können aber im Grunde keine menschlichen Gelenkpräparate (Humanpräparate) wie beim Ganzkörperobjekt eingespannt werden, bei denen beide Gelenkteile in einer besonderen Lage zueinander fixiert werden müssen.

Der Erfindung liegt deshalb die Aufgabe zugrunde, eine medizinische Haltevorrichtung der eingangs genannten Art so zu verbessern, dass damit nahezu alle menschlichen Gelenkpräparate zu Übungszwecken so eingespannt oder gelagert werden können, wie dies beim lebenden Ganzkörperobjekt der Fall ist.

Diese Aufgabe wird durch die im Patentanspruch 1 angegebene Erfindung gelöst. Weiterbildungen und vorteilhafte Ausführungsbeispiele der Erfindung sind in den Unteransprüchen angegeben.

Die Erfindung hat den Vorteil, dass durch die Gegenlagervorrichtung auch bei sehr kleinen Humanpräparaten die körperfernen Gelenkteile so gelagert und fixiert werden können, dass dadurch für den Operateur die zu operierenden Gelenkstellen gut erreichbar sind und deren Lagerung so nachbildbar ist, wie dies am lebenden Ganzkörperobjekt vorkommt. Dies hat gleichzeitig den Vorteil, dass damit für Schulungszwecke nahezu alle denkbaren Gelenkoperationen und Arthroskopien auf einfache Weise geübt werden können, da durch die in allen Raumachsen verstellbare Gegenlagervorrichtung auch beliebige Lagerformen nahezu aller körperfernen Gelenkteile ermöglicht werden.

Eine besondere Ausbildungsart der Erfindung mit mehreren über Drehgelenke verbundene Befestigungsrohre und Befestigungsköpfe hat den Vorteil, dass hierdurch auf einfache Weise jede beliebige Lagerung der Humanpräparate oberhalb des Traggestells ermöglicht wird. Insbesondere die dadurch erzielbaren Verstellmöglichkeiten ermöglichen auch eine schnelle Lagerung jedes einzelnen Humanpräparats, so dass die Vorbereitungszeiten auch für größere Schulungsveranstaltungen gering gehalten werden können.

Eine weitere Ausführungsart der Erfindung mit einem Befestigungskopf mit gegenüberliegenden Bohrungen in parallelen Seitenwänden hat den Vorteil, dass damit eine feste und kaum veränderbare Lagerung und Fixierung auch von relativ großen Humanpräparaten wie zum Beispiel Hüftpräparaten möglich ist. Dies hat gleichzeitig den Vorteil, dass eine Bohrstange mit elektrischen Bohrvorrichtungen zur schnellen Fixierung benutzt werden kann. Gleichzeitig hat dies den Vorteil, dass damit auf einfache Weise auch die Knochenteile durchdrungen werden können, was zu einer sehr festen Einspannung führt, um auch kraftaufwändige chirurgische Gelenkeingriffe zu ermöglichen.

Eine besondere Ausführung der Erfindung mit einer in allen Raumrichtungen verstellbaren und mit einer Zugkraft beaufschlagbaren Gegenlagervorrichtung hat den Vorteil, dass damit auch Gelenkoperationen trainiert werden können, die nicht nur einen Längszug an den Extremitäten, sondern auch eine laterale Kraftrichtung erfordern.

Eine weitere besondere Ausbildungsart der Erfindung, bei der das Traggestell als Tisch ausgebildet ist, hat den Vorteil, dass dadurch spezielle Laborunterbauten nicht mehr notwendig sind. Insbesondere kann dabei die Tischplatte auf einfache Weise aus röntgendurchlässigen Material wie zum Beispiel Kunststoff ausgeführt werden, wodurch die eingestellte Lagerung und Fixierung sogleich durch ein Bildwandlergerät oder ein Röntgengerät überprüfbar ist. Dabei hat insbesondere die wannenförmige Tischplatte den Vorteil, dass diese mit einem Ablauf nach unten versehen werden kann, wodurch die austretende Körperflüssigkeit durch eine Vakuumabsaugung leicht hygienisch entsorgbar ist. Das tischförmige Lagergestell hat zusätzlich den Vorteil, dass an den Tischfüssen auf einfache Weise feststellbare Fahrrollen vorgesehen werden können, wodurch die gesamte Schulungsoperationsvorrichtung mobil oder stationär verwendbar ist.

Eine weitere besondere Ausbildung der Erfindung verwendet an der Haltvorrichtung noch mindestens eine zusätzliche Instrumentenablage, die den Vorteil hat, dass der Schulungsoperateur nicht nur seine Humanpräparate, sondern auch seine gesamten Operationshilfsmittel an der Schulungsoperationsvorrichtung lagern kann.

Die Erfindung wird anhand eines Ausführungsbeispiels, das in der Zeichnung dargestellt ist, näher erläutert. Es zeigen:
- Fig. 1:: einen Schulungsoperationstisch mit einer medizinischen Haltevorrichung für menschliche Hüftpräparate, und
- Fig. 2:: einen Schulungsoperationstisch mit einer medizinischen Haltvorrichtung für menschliche Schulterpräparte.

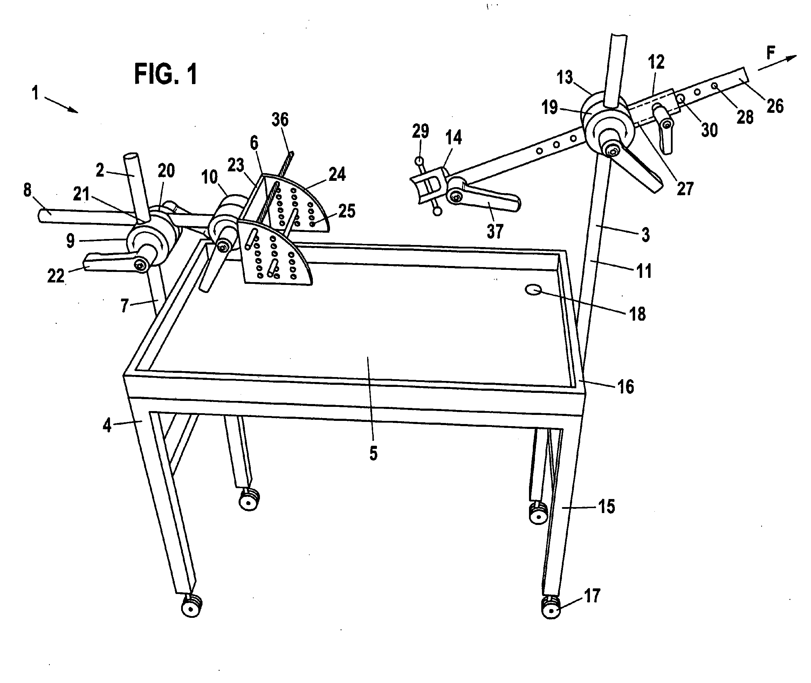

In Fig. 1 der Zeichnung ist ein Schulungsoperationstisch 1 mit einer medizinischen Haltvorrichtung für menschliche Hüftpräparate dargestellt, der an einer Tischseite eine Spannaufnahmevorrichtung 2 für das Hüftpräparat und an der gegenüberliegenden Tischseite eine Gegenlagervorrichtung 3 aufweist.

Der Schulungsoperationstisch 1 besteht im Grunde aus der Haltevorrichtung und einem Traggestell, das als mobiles Tischgestellt 4 ausgebildet ist. Dabei wird die Haltevorrichtung von einer Spannaufnahmevorrichtung 2 zur Aufnahme eines menschlichen Hüftpräparats und einer Gegenlagervorrichtung 3 zur Fixierung des Gegengelenkteils als körperfernes Gelenkteil gebildet. Das mobile Tischgestell 4 enthält eine viereckige, vorzugsweise rechteckige, Tischplatte 5, die auf vier Tischfüßen 15 befestigt ist. Zur Veränderung des Schulungsortes sind die Tischfüße vorzugsweise auf vier feststellbaren Rollen 17 gelagert. Die Tischplatte 5 besteht aus einem röntgendurchlässigen Material, vorzugsweise einem thermoplastischen HDPE-Kunststoffmaterial (High Density Polyethylen), das eine Röntgenkontrolle der Lagerung oder des Schulungsergebnisses zulässt. Die Tischplatte 5 ist wannenförmig ausgebildet oder nach oben mit einem ca. 10 bis 50 mm hohen Rand 16 umgeben, der mit der Tischplatte 5 eine Auffangwanne für die abtropfende Präparatsflüssigkeit bildet. Zum Ablassen der Präparatsflüssigkeit und zur einfachen Reinigung enthält die Tischplatte 5 vorzugsweise in einer tieferliegenden Ecke einen verschließbaren Ablauf 18. Es können aber auch in zusätzlichen Ecken Abläufe vorgesehen werden.

Der dargestellte Schulungsoperationstisch 1 ist vorzugsweise zur Durchführung von Hüftoperationen oder einer Hüftarthroskopie vorgesehen. Dazu ist an einer Querseite die Spannaufnahmevorrichtung 2 und an der gegenüberliegenden Querseite die von dieser beabstandete Gegenlagervorrichtung 3 angebracht. Die Spannaufnahmevorrichtung 2 besteht dabei aus einem Befestigungsrohr als erstes vertikales Befestigungsrohr 7, einem weiteren Befestigungsrohr als erstes horizontales Befestigungsrohr 8, zwei Drehgelenken 9, 10 und einem Befestigungskopf als ersten Befestigungskopf 6, der speziell für menschliche Hüftpräparate vorgesehen ist. Dabei ist das erste vertikale Befestigungsrohr 7 senkrecht nach oben über das Tischgestell 4 ragend an diesem befestigt. Das erste vertikale Befestigungsrohr 7 ist in einer Bohrung 21 eines ersten Drehgelenks 9 axial verstellbar und horizontal verschwenkbar geführt. Dabei besteht jedes Drehgelenk 9 im Grunde aus zwei kreisrunden gleichartigen Scheibenhälften 19, die gegeneinander verdrehbar sind. In jeder Scheibenhälfte 19 ist eine durchgehende Bohrung 21 vorgesehen, durch die jeweils ein Befestigungsrohr 7, 8 geführt ist. Zum Einspannen der Befestigungsrohre 7, 8 ist in jeder Scheibenhälfte 19 ein Klemmspalt 20 zur Bohrung 21 in Durchführrichtung der Befestigungsrohre 7, 8 eingelassen.

Zum Festklemmen der Befestigungsrohre 7, 8 sowie zum Festklemmen der beiden verschwenkbaren Scheibenhälften 19 ist etwa zentral in jeder Scheibenhälfte 19 eine axiale Durchgangsbohrung eingebracht, in die von jeder Seite eine Gewindekurbel 22 eingeschraubt wird, durch die sowohl die Befestigungsrohre 7, 8 als auch die Scheibenhälften 19 gegeneinander verklemmt werden können. Dadurch ist das erste horizontale Befestigungsrohr 8 am ersten vertikalen Befestigungsrohr 7 vertikal verschiebbar und horizontal verschwenkbar und dann klemmbar mittels der Gewindekurbeln 22 zu fixieren. Darüberhinaus kann dadurch das horizontale Befestigungsrohr 8 sowohl axial verschoben und in seiner Winkellage zur Tischplatte 5 verschwenkt und fixiert werden. Dadurch ergibt sich durch das erste Drehgelenk 9 eine Verstellbarkeit in alle drei Raumachsen.

An dem ersten horizontalen Befestigungsrohr 8 ist oberhalb der Tischplatte 5 noch ein zweites Drehgelenk 10 angebracht, an das zur Tischmitte 5 gerichtet in der zweiten Bohrung 21 der erste Befestigungskopf 6 angeordnet ist, der ebenfalls in alle Richtungen verschwenkbar und fixierbar ist. Dabei ist dieses zweite Drehgelenk 10 baugleich zum ersten Drehgelenk 9 ausgebildet.

Der erste Befestigungskopf 6 ist dabei zur Aufnahme und Lagerung vorzugsweise von menschlichen Hüftpräparaten vorgesehen. Diese Hüftpräparate enthalten nur jeweils eine Hüfthälfte mit nur einem Hüftgelenk, wobei der erste Befestigungskopf 6 sowohl für die rechte oder die linke Hüfthälfte verwendbar ist. Dabei enthält der erste Befestigungskopf 6 eine rechteckige Rückwand 23, die quer zum ersten horizontalen Befestigungsrohr 8 angeordnet und mittels eines nicht dargestellten Rohrstumpfes am zweiten Drehgelenk 10 vertikal verschwenkbar fixiert ist. Die Rückwand 23 ist dabei auf die Größe der Hüftpräparate abgestimmt und vorzugsweise 200 bis 500 mm breit, 100 bis 300 mm hoch und 5 bis 15 mm dick. An den beiden äußeren vertikalen Seitenkanten der Rückwand 23 sind zwei parallel und in Längsrichtung der Tischplatte 5 ausgerichtete Seitenwände 24 befestigt.

Die Seitenwände 24 enthalten eine Vielzahl vorzugsweise mindestens 3 bis 30 relativ gleichmäßig verteilte Einspannbohrungen 25, wobei die nach oben gerichtete Kante der Seitenwände 25 vorzugeweise wie ein Viertelkreisumfang abgerundet ist. Die Einspannbohrungen 25 haben vorzugsweise einen Durchmesser von 6 bis 12 mm und dienen zur Führung und Fixierung von Bohrstangen 36. Dabei wird zum Einspannen und Fixieren das Hüftpräparat auf die Rückwand 23 und zwischen den Seitenwänden 24 angeordnet und mittels mindestens drei Bohrstangen 36 zwischen den Seitenwänden 24 befestigt. Die Bohrstangen 36 werden dabei durch die sich gegenüberliegenden Einspannbohrungen 25 solange in die Hüftknochen eingebohrt, bis die Bohrstange in der gegenüberliegenden Einspannbohrung 25 aus der Seitenwand 24 austritt. Die Bohrstangen 36 verbleiben dann während der Schulungsoperation im Hüftpräparat und spannen dies fest im ersten Befestigungskopf 6 ein. Dabei wird das Hüpfpräparat so eingespannt, dass der körpernahe Hüftteil an der Rückwand 23 anliegt, während der körperferne Teil mit dem Gelenkteil des Extremitätenknochens zur gegenüberliegenden Gegenlagervorrichtung 3 gerichtet ist. Durch eine entsprechende Verstellung der Drehgelenke 9, 10 und der ersten Befestigungsrohre 7, 8 ist dabei eine Operationslagerung des Hüftpräparats nachbildbar wie sie einer Ganzkörperlagerung in etwa entspricht.

Allerdings ist es häufig zur optimalen Lagerung und Fixierung von Gelenkpräparaten notwendig, nicht nur das körperseitige Gelenkteil, sondern auch das körperferne Gelenkteil in einer vorgegebene Gegenlagerung zu halten oder zu belasten, um eine reale Ganzkörperlagerung nachzubilden. Dazu ist am Schulungsoperationstisch 1 als Teil der Haltevorrichtung zusätzlich noch eine Gegenlagervorrichtung 3 angebracht. Diese besteht aus einem Befestigungsrohr als zweites vertikales Befestigungsrohr 11, einem Drehgelenk als drittes Drehgelenk 13, einem weiteren Befestigungsrohr als zweites horizontales Befestigungsrohr 12 mit Haltstange 26 und einem weiteren Befestigungskopf als zweiten Befestigungskopf 14. Das zweite vertikale Befestigungsrohr 11 ist dabei an der dem ersten vertikalen Befestigungsrohr 7 gegenüberliegenden Querwand des Schulungstisches 1 vertikal und senkrecht befestigt. Dabei ist das zweite vertikale Befestigungsrohr 11 entsprechend dem ersten vertikalen Befestigungsrohr 7 ausgebildet, kann aber in der Länge und auch im Durchmesser von diesem abweichen. An diesem zweiten vertikalen Befestigungsrohr 11 ist das dritte Drehgelenk 13 angeordnet, das ähnlich dem ersten und zweiten Drehgelenk 9, 10 ausgebildet ist. Es enthält ebenfalls zwei kreisrunde Schreibenhälften 19, wobei jeder Scheibenhälfte 19 eine lineare Bohrung 21 zur Durchführung der beiden Befestigungsrohre 11, 12 enthält. Allerdings weist die Scheibenhälfte 19 für das zweite horizontale Befestigungsrohr 12 ein Innengewinde und das zweite horizontale Befestigungsrohr 12 ein daran angepasstes Außengewinde 27 auf, um das körperferne Gelenkteil mit einer Zugkraft zu belasten.

In diesem zweiten horizontalen Befestigungsrohr 12 ist eine Haltstange 26 geführt, die auch durch das dritte Drehgelenk 13 verläuft und die vorzugsweise regelmäßig beabstandete Querbohrungen 28 aufweist. An das zur Tischmitte ausgerichtete Ende der Haltstange 26 ist dann der zweite Befestigungskopf 14 mittels einer weiteren Gewindekurbel 22 befestigt. Die Befestigungskurbel besteht dabei vorzugsweise aus einem Kurbelgriff 37, an dem eine Gewindestange befestigt ist. Dabei ist der zweite Befestigungskopf 14 wie ein in Längsrichtung geteilter Zylinderstumpf ausgebildet, der in Querrichtung einen einsteckbaren Befestigungsbolzen 29 enthält, der zur Fixierung des körperfernen Gelenkteils des Hüftpräparates dient. Zur körpergerechten Lagerung wie bei einem lebenden Operationsobjekt ist das zweite horizontale Befestigungsrohr 12 durch das dritte Drehgelenk 13 sowohl in der vertikalen Höhe verstellbar, als auch zur Tischplatte 5 vertikal und horizontal verschwenkbar. Zusätzlich ist der zweite Befestigungskopf 14 durch eine Haltestange 26 im Abstand zum ersten Befestigungskopf 6 axial verstellbar und durch einen Befestigungsbolzen als zweiten Befestigungsbolzen 30 in einer Querbohrung 28 hinter dem zweiten horizontalen Befestigungsrohr 12 fixierbar. Dabei ist durch das Außengewinde 27 auf dem zweiten horizontalen Befestigungsrohr 12 das körperferne Gelenkteil mit einer Zugkraft belastbar, in dem das Außengewinde 27 mittels seiner Gewindekurbel 22 aus dem dritten Drehgelenk 13 herausgedreht wird. Durch die im zweiten horizontalen Befestigungsrohr 12 lose gelagerte Haltestange 26 ist dabei gewährleistet, dass der zweite Befestigungskopf 14 während des Ausschraubvorgangs nicht um seine Längsachse verdreht wird, sondern in seiner Einspannposition verbleibt. Deshalb ist auch die Gegenlagervorrichtung 3 so ausgebildet, dass der zweite Befestigungskopf 14 in allen drei Raumachsen verstellbar und mit einer zusätzlichen Zugkraft F belastbar ist.

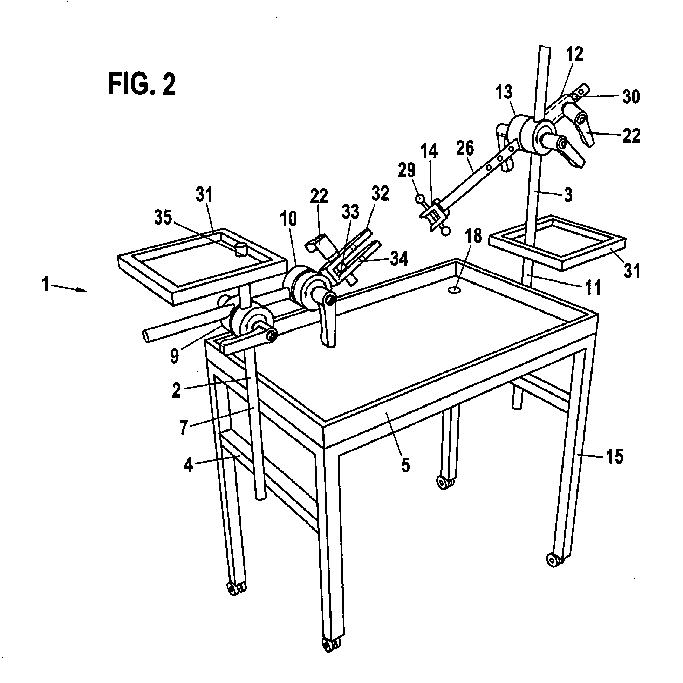

In Fig. 2 der Zeichnung ist ein Schulungsoperationstisch 1 mit einer medizinischen Haltvorrichtung für menschliche Schulterpräparate dargestellt, die an einer Tischseite eine Spannaufnahmevorrichtung 2 vorzugsweise für ein Schulterpräparat und an der gegenüberliegenden Tischseite eine Gegenlagervorrichtung 3 aufweist. Dieser Schulungsoperationstisch 1 ist im wesentlichen wie der Schulungsoperationstisch 1 nach Fig. 1 der Zeichnung ausgebildet und unterscheidet sich lediglich durch seinen Befestigungskopf für das körpernahe Schultergelenkteil und enthält noch zusätzlich zwei Instrumentenablagen 31. Deshalb besitzen die funktionsgleichen Teile der Fig. 2 die gleichen Bezugszeichen wie in Fig. 1 der Zeichnung.

So besitzt diese Haltevorrichtung nach Fig. 2 der Zeichnung ebenfalls an einer Querseite des Operationstisches 1 eine Spannaufnahmevorrichtung 2 vorzugsweise für den körpernahen Gelenkteil eines menschlichen Gelenkpräparates und gegenüberliegend und von dieser beabstandet eine Gegenlagervorrichtung 3 vorzugsweise für ein körperfernes Gelenkteil. Dabei besitzt hingegen die Spannaufnahmevorrichtung 2 einen speziellen Befestigungskopf als dritten Befestigungskopf 32, der insbesondere zur Lagerung und Fixierung von menschlichen Schulterpräparaten des körpernahen Gelenkteils ausgebildet ist. Dieser besteht aus einer kleinen rückwärtigen Querwand 33 vorzugsweise mit einer Breite von 80 bis 150 mm, einer Höhe von 30 bis 80 mm und einer Dicke von 5 bis 15 mm. An dieser Querwand 33 sind zwei parallel angeordnete Längswände 34 befestigt, die einen Abstand von 20 bis 70 mm voneinander besitzen, ca. 150 bis 300 mm lang sind und eine Dicke von 5 bis 15 mm aufweisen. Zum Einspannen des körpernahen Schultergelenkteils ist von oben in einer Durchgangsbohrung beider Längswände 34 eine Gewindekurbel 22 vorgesehen, durch die mittels einer Gewindebohrung in der unteren Längswand 34 der Abstand zwischen den beiden Längswänden 34 verringerbar ist und so das Schulterpräparat zwischen den Längswänden eingespannt wird. Um ein derartiges Schulterpräparat möglichst wie beim lebenden Menschen lagern zu können, sind die Längswände 34 im Normalfall parallel übereinander angeordnet. Dabei kann der dritte Befestigungskopf 32 über die beiden Drehgelenke 9, 10 in alle drei Raumachsen verstellt werden, so dass alle denkbaren Lagermöglichkeiten zumindest für das körpernahe Schultergelenkteil real nachbildbar sind. Andererseits ist die gegenüberliegende Gegenlagervorrichtung 3 wie bereits zu Fig. 1 beschrieben ausgebildet, so dass mit dieser Haltevorrichtung auch das körperferne Gelenkteil des Schulterpräparats wie beim lebenden Menschen lagerbar und mit einer Zugkraft F belastbar ist.

Der Schulungsoperationstisch 1 ist sowohl an der Spannaufnahmevorrichtung 2 als auch an der Gegenlagervorrichtung 3 mit einer Instrumentenauflage 31 versehen. Diese sind wie eine flache wannenförmige Schale ausgebildet, die quadratisch, rechteckig oder rund ist. Dabei ist an nur einer der Seitenränder eine runde Aussparung 35 vorgesehen, die an dem Durchmesser der vertikalen Befestigungsrohre 7, 11 angepasst ist. Zum Fixieren der höhenverstellbaren und seitlich verschwenkbaren Instrumentenablagen 31 sind ebenfalls nicht dargestellte Gewindekurbeln 22 vorgesehen, die die Befestigungsrohre 7, 11 gegenüber den Aussparungen 35 verklemmen.

Die Instrumentenablagen 31 können als einzelne oder zu mehreren auch bei dem Schulungsoperationstisch 1 nach Fig. 1 der Zeichnung vorgesehen werden. Die Haltvorrichtung ist auch nicht nur für menschliche Hüft- und Schulterpräparate einsetzbar, sondern kann auch für andere menschliche Gelenkpräparate insbesondere an den menschlichen Extremitäten wie Fußgelenken, Kniegelenken, Handgelenken und Armgelenken verwendet werden. So ist insbesondere der erste Befestigungskopf 6 auch für andere Gelenkpräparate einsetzbar, da durch die verschiedenen Einspannbohrungen 25 in Verbindung mit den Bohrstangen 36 alle menschlichen Gelenkpräparate an den daran bekannten Ankerpunkten eingespannt werden können. Zur Fixierung der Gelenkpräparate in Querrichtung sind an den Bohrstangen 36 beiderseits noch Muffen anbringbar, die ein Verschieben in Querrichtung verhindern. Allerdings können die Befestigungsköpfe 6, 14, 32 auch durch eine Veränderung der Abmessungen so ausgeführt werden, dass sie auch für andere Gelenkpräparate verwendbar sind. Aus Hygienegründen ist es sinnvoll, alle Bauteile der Haltevorrichtung und des Tischgestells 4 möglichst aus Edelstahl und/oder einem hochfesten Kunststoff herzustellen. Zur vertikalen Befestigung der Befestigungsköpfe 6, 14, 32 sind nicht nur Befestigungsrohre 7, 11, sondern auch Stangen und/oder Haltesäulen geeignet, die mindestens über ein Drehgelenk 9, 10, 13 mit den Befestigungsköpfen 6, 14, 32 verbindbar sind. Dabei können die Befestigungsrohre 7, 11, Stangen und/oder Haltesäulen mit runden als auch eckigen Querschnitten ausgebildet sein.

Die Drehgelenke 9, 10, 13 können in vereinfachter Form auch quaderförmig einteilig ausgebildet sein, durch dessen Grundkörper eine vertikale und ein horizontale Bohrung 21 vorgesehen ist. Derartige Drehgelenke sind dann allerdings nicht auch vertikal, sondern nur horizontal verschwenkbar. Vorzugsweise sind derartige Gelenke aus einem Kunststoffmaterial kostengünstig herstellbar. Das Tischgestell 4 besteht vorzugsweise aus gleichartigen Vierkantrohren. Dabei können die Tischfüße 15 zur Höhenverstellung auch teleskopisch ausgebildet sein, wobei eine Fixierung durch Gewindekurbeln 22 erfolgen kann. Der dritte Befestigungskopf 14 kann auch als U-Stumpf ausgebildet sein, der aus drei linearen Balkenteilen besteht, die u-förmig miteinander verbunden sind.

## Patentansprüche

1. Medizinische Haltevorrichtung zur Lagerung von Humanpräparaten, die für Schulungszwecke vorgesehen ist, die ein Traggestell (4) enthält, auf dessen horizontaler Platte (5) eine wannenförmige Vertiefung vorgesehen ist, wobei auf dem Traggestell (4) mindestens eine in alle drei Raumachsen verstellbare Spannaufnahmevorrichtung (2) angeordnet ist, in der ein Humanpräparat mit einem Gelenkteil befestigbar ist, **dadurch gekennzeichnet, dass** am Traggestell (4) von der Spannaufnahmevorrichtung (2) seitlich beabstandet eine Gegenlagervorrichtung (3) befestigt ist, die zur Lagerung oder Fixierung des anderen Gelenkteils dient.

2. Haltevorrichtung nach Anspruch 1, **dadurch gekennzeichnet, dass** die Spannaufnahmevorrichtung (2) und die Gegenlagervorrichtung (3) jeweils mindestens ein vertikales Befestigungsrohr (7, 11), eine vertikale Stange oder eine vertikale Haltesäule enthält, an das oder die über mindestens ein Drehgelenk (9, 10, 13) jeweils ein Befestigungskopf (6, 14, 32) angeordnet ist.

3. Haltevorrichtung nach Anspruch 1 oder 2, **dadurch gekennzeichnet, dass** die Spannaufnahmevorrichtung (2) mindestens ein am Traggestell (4) befestigtes Befestigungsrohr als erstes vertikales Befestigungsrohr (7) enthält, das über ein Drehgelenk (9) mit einem weiteren Befestigungsrohr als erstes horizontales Befestigungsrohr (8) über ein zweites Drehgelenk (10) mit dem Befestigungskopf (6, 32) verbunden ist.

4. Haltevorrichtung nach einem der Ansprüche 1 bis 3, **dadurch gekennzeichnet, dass** die Gegenlagervorrichtung (3) mindestens ein am Traggestell (4) befestigtes Befestigungsrohr als zweites vertikales Befestigungsrohr (11) enthält, das über ein Drehgelenk als drittes Drehgelenk (13) mit einem weiteren Befestigungsrohr als zweites horizontales Befestigungsrohr (12) verbunden ist.

5. Haltevorrichtung nach Anspruch 4, **dadurch gekennzeichnet, dass** in dem zweiten horizontalen Befestigungsrohr (12) eine Haltestange (26) gelagert ist, an dessen einem Ende in Richtung der Traggestellmitte (4) ein Befestigungskopf als zweiter Befestigungskopf (14) angeordnet ist.

6. Haltevorrichtung nach Anspruch 5, **dadurch gekennzeichnet, dass** die Haltestange (26) zur axialen Lagerung mehrere axial beabstandete Querbohrungen (28) enthält, in die zur Fixierung ein Befestigungsbolzen als zweiter Befestigungsbolzen (30) angeordnet ist.

7. Haltevorrichtung nach einem der Ansprüche 4 bis 6, **dadurch gekennzeichnet, dass** das zweite horizontale Befestigungsrohr (12) einen Gewindeabschnitt (27) enthält, an dem die Haltstange (26) axial gelagert ist, wobei der Gewindeabschnitt (27) so mit dem dritten Drehgelenk (13) verbunden ist, dass bei einer Drehung des zweiten horizontalen Befestigungsrohres (12) auf den zweiten Befestigungskopf (14) eine Zugkraft F übertragen wird.

8. Haltevorrichtung nach einem der Ansprüche 1 bis 7, **dadurch gekennzeichnet, dass** einer der Befestigungsköpfe als ein erster Befestigungskopf (6) ausgebildet ist, der eine mit einem Drehgelenk (10) verbundene Rückwand (23) enthält, an der seitlich zwei parallel angeordnete Seitenwände (24) befestigt sind, wobei in den Seitenwänden (24) mehrere sich gegenüberliegende Einspannbohrungen (25) eingebracht sind, die zur Durchführung und Fixierung von mehreren Bohrstangen (36) dienen.

9. Haltevorrichtung nach einem der Ansprüche 1 bis 7, **dadurch gekennzeichnet, dass** einer der Befestigungsköpfe als ein zweiter Befestigungskopf (32) ausgebildet ist, der eine mit dem Drehgelenk (10) verbundene Querwand (33) enthält, an die zwei voneinander parallel beabstandete Längswände (34) angeordnet sind und die von einer Gewindekurbel (22) so durchdrungen sind, dass bei einer Drehung der Gewindekurbel (22) der Abstand der Längswände zum Einspannen eines Humanpräparates verringerbar ist.

10. Haltevorrichtung nach einem der Ansprüche 1 bis 7, **dadurch gekennzeichnet, dass** einer der Befestigungsköpfe als ein dritter Befestigungskopf (14) ausgebildet ist, der einen geteilten Zylinderstumpf oder einen U-Stumpf aufweist, durch dessen gegenüberliegende Außenwände oder Balkenteile zum Einspannen der Humanpräparate ein Befestigungsbolzen als ein erster Befestigungsbolzen (29) eingebracht ist.

11. Haltevorrichtung nach einem der Ansprüche 1 bis 10, **dadurch gekennzeichnet, dass** diese mindestens ein Drehgelenk (9, 10 , 13) enthält, das aus mindestens zwei Scheibenhälften (19) besteht, die zueinander verdreh- oder verschwenkbar angeordnet sind und durch mindestens eine Gewindekurbel (22) zueinander fixierbar sind, wobei in jeder Scheibenhälfte (19) eine Bohrung (21) eingebracht ist, die zur Durchführung und Fixierung jeweils eines Befestigungsrohres (7, 11, 8, 12) dient.

12. Haltevorrichtung nach einem der Ansprüche 1 bis 11, **dadurch gekennzeichnet, dass** das Traggestell als Tischgestell (4) ausgebildet ist, das eine horizontale Tischplatte (5) aus einem röntgendurchlässigen und flüssigkeitsdichten Material aufweist.

13. Haltevorrichtung nach Anspruch 12, **dadurch gekennzeichnet, dass** das Tischgestell (4) mindestens drei fahr- und/oder feststellbare Rollen (17) enthält, wobei die Tischplatte (5) innerhalb der wannenförmigen Vertiefung mindestens einen verschließbaren Ablauf (18) aufweist.

14. Haltevorrichtung nach einem der Ansprüche 1 bis 10, **dadurch gekennzeichnet, dass** diese mindestens ein Drehgelenk (9, 10, 13) enthält, das einen quaderförmigen Grundkörper aufweist, in den seitlich nebeneinander zwei um 90° versetzte Bohrungen (21) vorgesehen sind.
